# EUROPEAN PATENT APPLICATION

(11) **EP 4 776 283 A1**
(43) Date of publication of application: **15.07.2026**
(21) Application number: 25151327.1
(22) Date of filing: 10.01.2025
(51) Int. Cl.: G11B 20/18, H04J 3/00, H04L 1/00, H04L 7/00, H04N 21/43

(54) **ASSESSING EVENT STREAM INTEGRITY**

(71) Applicant: Barclays Execution Services Limited, London E14 5HP (GB)
(72) Inventor: KAR, Sanjeev, 411014 Pune (IN); SHARMA, Chaitanya, 411014 Pune (IN); CHAUHAN, Virat Singh, 411014 Pune (IN)
(74) Representative: Carpmaels & Ransford LLP

(57) **Abstract**

A computer-implemented method for assessing event stream integrity is disclosed. The method comprises assuming, by a first utility program, an event producer role to access temporary producer security credentials, assuming, by a second utility program, an event consumer role to access temporary consumer security credentials, generating, by the first utility program, a dummy event comprising a dummy event payload, posting, by the first utility program, the dummy event to the event stream, retrieving, by the second utility program, the dummy event from the event stream based on the dummy event payload, determining, by the second utility program, event stream integrity based on the dummy event payload, and outputting, by the second utility program, a notification based on the determined event stream integrity.

## Description

### Technical Field

The present invention relates to methods and systems for ensuring data integrity in event-driven architectures. More particularly, it relates to computer-implemented methods and systems for assessing integrity of an event stream between a producer domain and a consumer domain in a distributed computing environment.

### Background

In contemporary digital environments, data has become ubiquitous, with a notable surge in the prevalence of protected data. Defined by its sensitive cognitive content and requirement for rigorous security measures, the prominence of protected data is steadily increasing. Consequently, there has been a corresponding escalation in the demand for systems specialised in processing protected data.

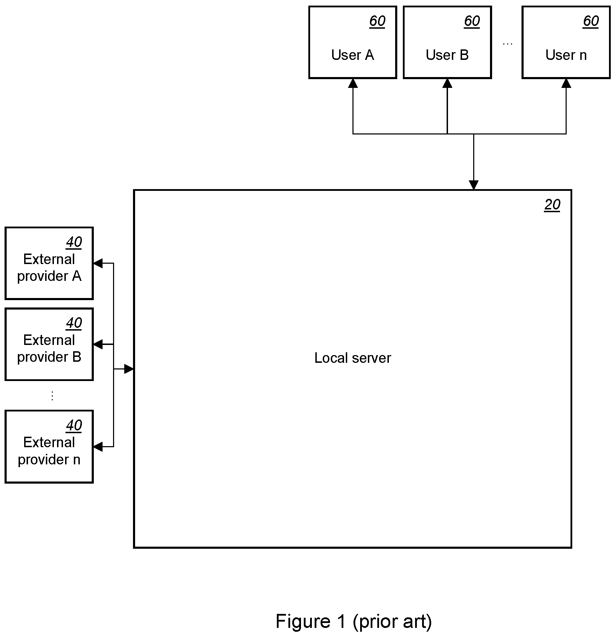

Traditionally, the processing of protected data has been centralised around local servers, as depicted in Figure 1. A local server serves as the focal point responsible for executing protected data processing tasks. These local servers are typically situated on-premises or within a private network environment, physically hosting a myriad of applications specialised in processing various aspects of protected data. In practical scenarios, these applications cater to diverse purposes, often corresponding to distinct products or services. For instance, in the context of consumer banking, one application may handle debit card transactions, while another may focus on credit card transactions.

Despite their historical prevalence, local servers are increasingly facing challenges for protected data processing. Such challenges include scalability constraints, overhead associated with maintenance, geographic limitations, data protection compliance, security vulnerabilities, computer resource redundancy, and latency issues. In light of these challenges and the ever-increasing complexity of the data processing landscape, a need has emerged for systems for processing protected data that transcend the limitations of local servers.

For example, in certain contexts of protected data processing, such as consumer banking, many domains and systems run on a combination of legacy and new technologies. These domains interact with each other via Application Programming Interfaces (APIs), events, or file transfer processes to execute an end-to-end user journey. The build and deployment timelines of the domains are usually determined by individual development teams based on work pipeline and resourcing capacity. Typically, the core-processing domains may be deployed first and then followed by upstream domains. Even though the integration interfaces between two domains can be agreed ahead of time, there may still be issues associated with integration when deploying an upstream domain. These integration issues may cause disruption to the overall user experience.

More specifically, event-driven architectures rely upon event streams to transmit events between applications for triggering and providing inputs to processes. These event streams generally require applications to possess credentials for posting or consuming events so as to maintain overall system security. However, event streams present several possible points of failure, such as insufficient producer or consumer credentials or event stream failure itself.

### Summary

The present invention provides an assessment technique which is capable of being run periodically to detect event stream communication issues as well as to check whether applications are able to access the event stream, prior to the event stream being deployed and run in a live environment where the event stream and the relevant components interact with end-users. According to aspects of the invention, the utility representing the technique can be configured to be run in two instances, one on a producer domain and another one on a consumer domain. The utility instances can assume producer and consumer roles respectively and then send a dummy event from the utility assuming the producer role to the utility assuming the consumer role through the event stream being assessed, and provide a notification based on the dummy event payload of the dummy event.

The present invention is defined by the independent claims, with further optional features being defined by the dependent claims.

In a first aspect of the invention, there is provided a computer-implemented method for assessing event stream integrity. Events are transmissible from a producer domain to a consumer domain through an event stream. The method comprises assuming, by a first utility program, an event producer role to access temporary producer security credentials, wherein the first utility program is executable by a first processor in the producer domain; assuming, by a second utility program, an event consumer role to access temporary consumer security credentials, wherein the second utility program is executable by a second processor in the consumer domain; generating, by the first utility program, a dummy event, wherein the dummy event comprises a dummy event payload; posting, by the first utility program assuming the event producer role, the dummy event to the event stream; retrieving, by the second utility program assuming the event consumer role, the dummy event from the event stream based on the dummy event payload; determining, by the second utility program, event stream integrity based on the dummy event payload; and outputting, by the second utility program, a notification based on the determined event stream integrity. By having utility programs which respectively assume an event producer role and an event consumer role, the method enables not only assessment of the inherent integrity of the event stream itself, but also whether applications are able to access the event stream.

In some embodiments, determining event stream integrity by the second utility program comprises performing analysis of the dummy event payload. In some embodiments, determining event stream integrity by the second utility program may comprise extracting one or more elements of the dummy event payload, and evaluating each of the one or more extracted elements against a respective predefined value. By evaluating the extracted element(s), e.g. a message field, of the dummy event payload against respective predefined values, the method enables event stream integrity to be assessed on the basis on a predefined condition, such as whether the message field of the dummy event payload includes a certain value.

In some embodiments, the method may further comprise receiving, at the first utility program, a target live event schema. In these embodiments, generating the dummy event may be based on the target live event schema. Furthermore, in some embodiments, prior to receiving the target live event schema, the method may further comprise requesting, by the first utility program, the target live event schema from a schema registry. The target live event schema enables the dummy event to be generated on the basis of a predefined format, such as the data types, relationships, and constraints. Such predefined formats are often necessary for the consumer of an event to properly consume the event.

In some embodiments, the method may further comprise validating, by the first utility program, the received target live event schema by comparing the dummy event payload against the target live event schema stored at the schema registry. By comparing the dummy event payload against the target live event schema, the first utility program can validate the schema that is received at the first utility program to ensure that it is suitable to be used for generating dummy events for the purpose of event stream integrity assessment.

In some embodiments, the method may further comprise requesting, by the second utility program from the schema registry, the target live event schema, and receiving, at the second utility program, the target live event schema. The target live event schema received at the second utility program can enable validation of the dummy event payload, for example by ensuring that the dummy event payload conforms to the structure as defined in the schema.

In some embodiments, the first utility program and the second utility program may be functionally identical prior to respectively assuming the event producer role and assuming the event consumer role. Respective configuration files can be supplied to respective utility programs to allow the utility programs to assume intended roles, e.g. an event producer role or an event consumer role. The use of functionally identical utility programs improves the overall computational efficiency of the method since the utility program does not require specific pre-programming prior to assuming respective roles. Moreover, this means that each domain needs only a single utility program in order to test the production and consumption of different streams.

In some embodiments, the method may further comprise storing, in a monitoring file, the determined event stream integrity. The storage of determined event stream integrity enables the integrity of the event stream to be recorded and tracked against time and changes to relevant components of the environment, which improves the ease of detecting and investigating errors and anomalies.

In some embodiments, if a result of the event stream integrity determination is a validation failure, outputting the notification may comprise outputting an alert indicating the validation failure in event stream integrity determination. This alert can help prevent wrong or corrupted data from being transmitted and affecting any downstream processes. Corrective actions can be taken upon receiving this alert to address the issue(s) that cause the validation failure.

In some embodiments, the notification may further comprise a failure indicator indicating a cause of the validation failure. Providing the cause of the validation failure in the notification allows quicker diagnosis and resolution of the validation failure thus a reduction in system downtime.

In some embodiments, the method may further comprise applying, by a live consumer program, a filter for identifying one or more live events based on one or more live event payloads, wherein the live consumer program is executable by a third processor in the consumer domain, and wherein each of the one or more live event payloads is different from the dummy event payload, and retrieving, by the live consumer program, the one or more identified live events. By applying the filter and only retrieving identified live events at the live consumer program, dummy event(s) that are used for assessing event stream integrity can be filtered out so that they do not cause performance impact to the live consumer program or any downstream process(s).

In a second aspect of the invention, there is provided a computing environment. The computing environment comprises one or more computer systems communicatively coupled to each other, and at least one processing system configured to perform the steps according to the first aspect of the invention.

In a third aspect of the invention, there is provided a computer-readable medium comprising instructions which, when processed by at least one processing system, cause the processing system to perform the steps according to the first aspect of the invention.

### Brief Description of the Drawings

Embodiments of the invention are described below, by way of example, with reference to the following drawings, in which:
Figure 1 depicts a conventional system for processing protected data.
Figure 2 illustrates a cloud computing environment-based system for processing protected data in which the methods of the invention may be implemented.
Figure 3A and Figure 3B show components of a cloud computing environment for implementing some embodiments of the invention.
Figure 4 shows an example architecture of a cloud computing environment for implementing some embodiments of the invention.
Figure 5 shows an exemplary integration pattern of a cloud computing environment for implementing some embodiments of the invention.
Figure 6 is a flow diagram of a computer-implemented method according to an embodiment of the invention.
Figure 7 illustrates components of a cloud computing environment for implementing some embodiments of the invention.
Figure 8 illustrates components of a cloud computing environment for implementing some embodiments of the invention.

### Detailed Description

Some embodiments of the present disclosure pertain to systems for processing protected data and methods related to processing protected data. Protected data, as referred to herein, is data that requires protecting due to its cognitive content. This means that protected data typically requires additional security provisions to prevent unauthorised access. Moreover, the storage and processing of protected data is often restricted. In some instances, the restriction is caused by local legislation, for example General Data Protection Regulation (GDPR) in the European Union, and the Data Protection Act 2018 in the United Kingdom. Protected data may include personal data, i.e., information relating to an identified or identifiable natural person. For example, protected data may include a name, an identification number, location data, an online identifier or one or more factors specific to the physical, physiological, genetic, mental, economic, cultural or social identity of a natural person. Protected data may also include financial data as an alternative or in addition.

Figure 1 illustrates a conventional system for processing protected data. As shown in Figure 1, such systems are centralised around a local server 20 that is responsible for performing the processing. The local server 20 is communicatively coupled to a plurality of user devices 60 (i.e. User A, User B... User n), from which processing requests may be received and to which processing outputs may be sent. Typically, a processing request relates to protected data of the user of the user device 40 that sends the request. The local server 20 is also communicatively coupled to a plurality of external provider systems 40 (i.e. External provider A, External provider B... External provider n), as some processes require input from an external provider to be performed. The communicative coupling is established via at least one communication network such as the Internet, a local area network (LAN), a wide area network (WAN), a cellular network (e.g. such as 3G, 4G LTE and 5G), and the like.

Local server 20 is a physical server or group of servers that are located on-premises or within a private network. Local server 20 stores a plurality of applications for processing protected data, each of the applications having a different purpose or underlying product to which it relates. For example, in a consumer banking context, one application may relate to debit card transactions while another application relates to credit card transactions.

The applications stored by local server 20 are typically batch-driven applications. This type of application is designed to process data in batches, where a set of data is collected, processed, and output before the next set of data is collected and processed. In this context, a 'batch' refers to a collection or grouping of data, tasks, or operations that are processed together as a single unit. Batch processing involves the execution of multiple tasks or data operations in a sequential or parallel manner, typically on a scheduled basis or when a predefined batch size is reached. Batches are often used to efficiently manage and process large volumes of data or perform complex operations that do not require real-time or immediate processing. For this reason, batch-driven applications may be thought of as synchronous applications. This is in contrast to event-driven applications which are asynchronous applications as the processing occurs once the data is received.

The local server 20 is configured to generate and receive messages in a relational data format. Relational data formats are structured and organised in tables, with rows representing records and columns representing attributes. This type of data format is commonly used in traditional database management systems and can be easily queried and manipulated using Structured Query Language (SQL). The use of a relational data format for message generation and reception at the local server 20 allows for compatibility with legacy systems and applications that rely on this type of data format.

### The Cloud Computing Environment

In contrast to conventional protected data processing systems such as the one depicted in Figure 1 where processing is performed primarily on the local server 20, some embodiments of the present invention may use a cloud computing environment 10 for protected data processing. Cloud computing environment 10 provides improved scalability, flexibility, reliability, and disaster recovery capabilities over local servers. This is because the infrastructure for cloud computing environment 10 is typically provided by dedicated cloud providers such as Amazon Web Services, Google Cloud or Microsoft Azure, that handle updates and maintenance of the infrastructure.

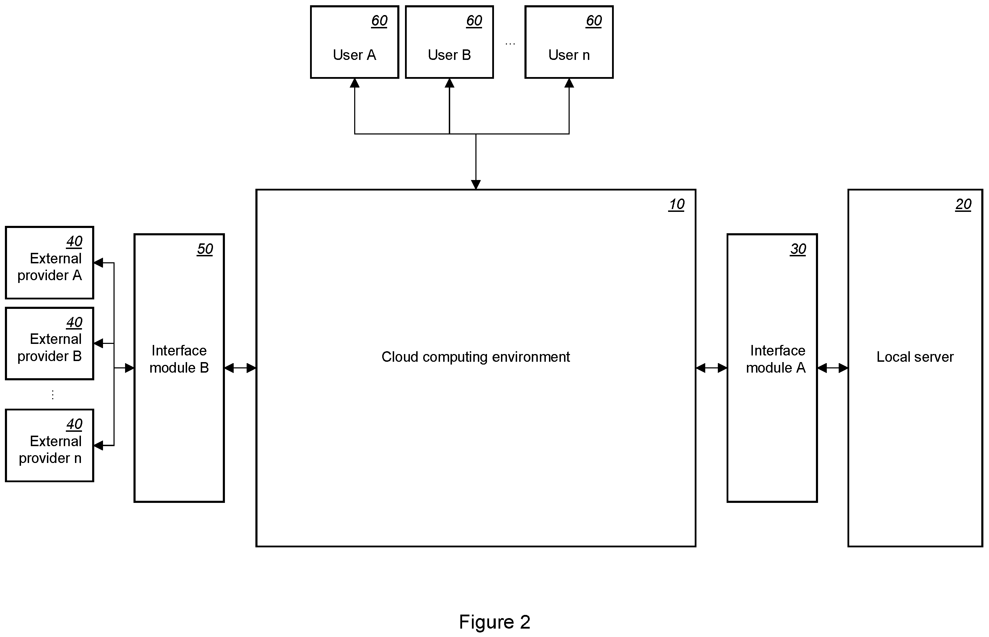

Figure 2 depicts an example system having a cloud computing environment 10 for processing protected data in which the methods of the invention may be implemented. As shown in Figure 2, the local server 20 is still present in this system. However, instead of being communicatively coupled to the plurality of user devices 60 and the plurality of external provider systems 40, the local server 20 is communicatively coupled to the cloud computing environment 10, and it is the cloud computing environment 10 which is communicatively coupled to the plurality of user devices 60 and the plurality of external provider systems 40. The communicative coupling is established via at least one communication network such as the Internet, a local area network (LAN), a wide area network (WAN), a cellular network (e.g. such as 3G, 4G LTE and 5G), and the like. Preferably, the at least one communication network utilises encryption (e.g., Secure Sockets Layer) to secure protected data being transferred to and from the cloud computing environment 10.

While the plurality of user devices 60 are able to natively couple to the cloud computing environment 10, for example via a dedicated application installed on the user device 60, local server 20 and external provider systems 60 typically contain legacy infrastructure and applications, and for this reason cannot natively be coupled to the cloud computing environment 10. This is because, unlike local server 20 and external provider systems 60 which use batch-driven applications, cloud computing environment 10 uses event-driven applications, where data is processed as events.

In the context of event-driven applications, an 'event' refers to a discrete and significant occurrence or notification within the cloud computing environment 10 that triggers a specific action or process. Events are used to signal that a particular condition or change has occurred and should be processed or responded to. For this reason, event-driven applications are designed to detect, capture, and respond to these events in real-time or near-real-time, allowing for responsive and dynamic behaviour within event-driven applications. Events can be generated by various sources, such as user interactions via user device 60, system events, or external sources such as external provider system 40 and local server 20, and they serve as the catalyst for initiating specific actions, processing logic, or workflows within the cloud computing environment 10.

Accordingly, interface modules are provided in the system to couple the local server 20 and the external provider systems 60 with the cloud computing environment 10. Specifically, Figure 2 shows a first interface module (interface module A) 30 that couples the local server 20 to the cloud computing environment 10, and a second interface module (interface module B) 50 that couples the external provider systems 60 to the cloud computing environment 10. Interface module A 30 and interface module B 50 may be outside and separate from the cloud computing environment. However, preferably, the cloud computing environment 10 contains interface module A 30 and interface module B 50. When interface module A 30 and interface module B 50 are provided in the cloud computing environment 10, these interface modules provide communicative coupling to the plurality of user devices 60 and the plurality of external provider systems 40, respectively.

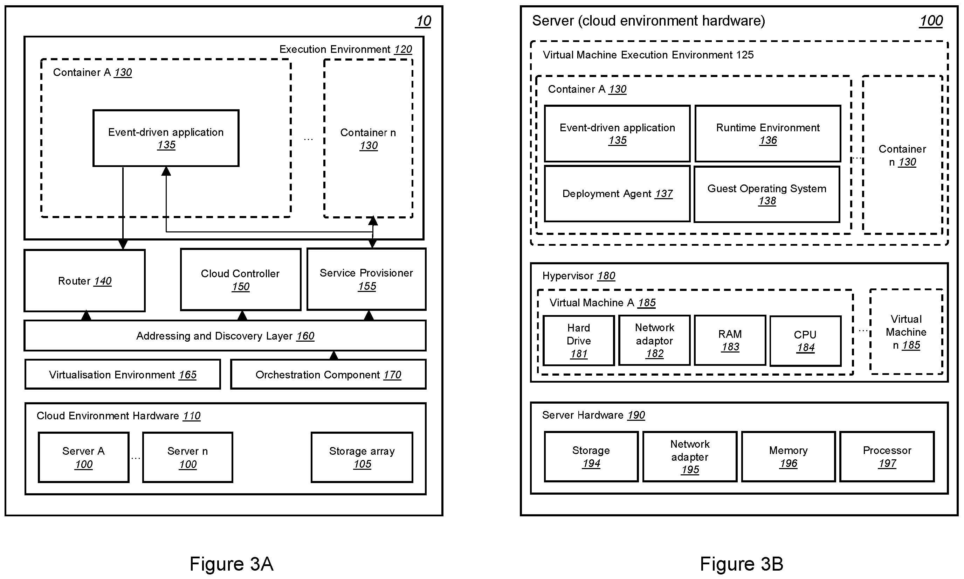

Before providing further details about cloud computing environment 10, interface module A 30, and interface module B 50, the components of cloud computing environment 10, as typically provided by a cloud provider, are discussed with respect to Figure 3A and Figure 3B.

As shown in Figure 3A, cloud computing environment 10 hosts one or more event-driven applications 135, which are executed in the cloud computing environment 10 for processing protected data that take the form of events. The event-driven application 135 may include executable and/or source code, depending on the implementation language. In this way, the computing resources required for processing protected data are moved from the local server 20, where the processing is performed in conventional systems, to cloud computing environment 10.

As seen in Figure 3A, cloud computing environment 10 comprises cloud computing environment hardware 110 that can be invoked to instantiate data processing, data storage, or other computer resources using cloud computing hardware 110 for a limited or defined duration. Cloud computing environment hardware 110 may comprise one or more physical servers 100, and a storage array network 105, as well as other suitable hardware. Cloud computing environment hardware 110 may be configured to provide a virtualisation environment 165 that supports the execution of a plurality of virtual machines 185 across the one or more physical servers 100. As described in relation to Figure 3B, the plurality of virtual machines 185 provide various services and functions for cloud computing environment 10.

Virtualisation environment 165 of Figure 3A includes orchestration component 170 that monitors the cloud computing environment hardware 110 resource consumption levels and the requirements of cloud computing environment 10 (e.g., by monitoring communications routed through addressing and discovery layer 160), and provides additional cloud computing environment hardware 110 to cloud computing environment 10 as needed. For example, if cloud computing environment 10 requires additional virtual machines 185 to host a further event-driven application 135, orchestration component 170 can initiate and manage the instantiation of the virtual machines 310 on the one or more servers 100 to support such needs. In one example implementation, virtualisation environment 165 may be implemented by running Amazon Elastic Compute Cloud (Amazon EC2) on servers 100.

Cloud computing environment 10 supports an execution environment 125 that comprises a plurality of virtual machines 185 (or plurality of containers 130) instantiated to host the one or more event-driven applications 135.

Event-driven applications 135 can access internal services provided by cloud computing environment 10 as well as external services from the plurality of external providers 40 and from the local server 20. A service provisioner 155 may serve as a communications intermediary between these available services (e.g., internal services and external services) and other components of cloud computing environment 10 (e.g., cloud controller 150, router 140, containers 130), utilising the methods discussed elsewhere herein. Addressing and discovery layer 160 provides a common interface through which components of cloud computing environment 10, such as service provisioner 155, cloud controller 150, router 140 and containers 130 in the execution environment 125 can communicate.

Cloud controller 150 is configured to orchestrate the deployment process for the one or more event-driven applications 135 in cloud computing environment 10. Typically, once cloud controller 150 successfully orchestrates the event-driven application 135 in a container, e.g. container A 130, the event-driven application 135 may be interacted with. For example, a user device 60 may interact with the event-driven application 135 through a web browser or any other appropriate user application residing on user device 60. Router 140 receives the access requests (e.g., a uniform resource locator or URL) and routes the request to container 130 which hosts the event-driven application.

It should be recognised that the embodiment of Figure 3A is merely exemplary and that alternative cloud computing environment architectures may be implemented consistent with the teachings herein.

Figure 3B is a schematic of an exemplary server 100 for implementing the cloud computing environment 10 of according some embodiments of the invention. In particular, Figure 3B depicts server 100 comprising server hardware 190 and virtual machine execution environment 125 having containers 130 with event-driven applications 135. The server hardware 190 may include local storage 194, such as a hard drive, network adapter 195, system memory 196, processor 197 and other I/O devices such as, for example, a mouse and keyboard (not shown).

A virtualisation software layer, also referred to as hypervisor 180, is installed on top of server hardware 190. Hypervisor 180 supports virtual machine execution environment 185 within which containers 130 may be concurrently instantiated and executed. In particular, each container 130 one or more event-driven applications 135, deployment agent 137, runtime environment 136 and guest operating system 138 packaged into a single object. This enables container 130 to execute event-driven applications 135 in a manner which is isolated from the physical hardware (e.g. server hardware 190, cloud computing environment hardware 110), allowing for consistent deployment regardless of the underlying physical hardware.

As shown in Figure 3B, virtual machine execution environment 125 of server 100 supports a plurality of containers 130. Docker is an example of a virtual machine execution environment 125 which supports containers 130. For each container 130, hypervisor 180 manages a corresponding virtual machine 185 that includes emulated hardware such as virtual hard drive 181, virtual network adaptor 182, virtual RAM 183, and virtual CPU 184.

It should be recognised that the various layers and modules described with reference to Figure 3B are merely exemplary, and that other layers and modules may be used with the same functionality without departing from the scope of the invention. It should further be recognised that other virtualised computer architectures may be used, such as hosted virtual machines.

### Cloud Computing Environment Architecture

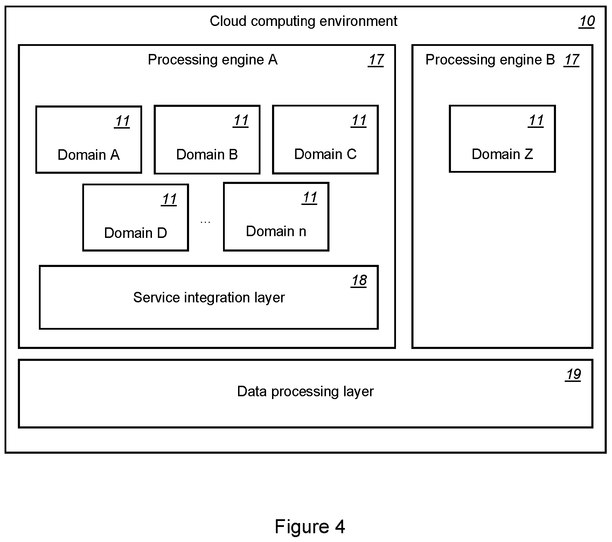

Figure 4 depicts an embodiment of cloud computing environment 10 architecture for implementing some embodiments of the present invention.

As shown in Figure 4, the cloud computing environment 10 contains one or more processing engines 17. Preferably, there are a plurality of processing engines 17. Figure 4 depicts two processing engines, processing engine A and processing engine B. Each processing engine 17 in the cloud computing environment 10 is a logical partition that is responsible for providing a particular processing function or subset of processing functions. Each processing engine 17 operates in an event-driven fashion. In other words, each processing engine 17 processes data as discrete events, and is able to support event-driven applications 135 of the type discussed with respect to Figure 3A and Figure 3B.

Each processing engine 17 has one or more domains 11. The domains 11 in a particular processing engine 17 provide security boundaries for protected data in the cloud computing environment 10. These domains may be separate and distinct within the cloud computing environment 10 allowing for the control of access to data based on different security levels. This separation of domains ensures that data is protected and only accessible by authorised users or applications. The domains 11 also modularise the particular processing function or subset of processing functions. Such modular architectures offer advantages such as scalability, reusability, and ease of maintenance by breaking the processing engine 17 down into smaller, interchangeable domains. Like the processing engines 17, each domain 11 processes data as discrete events and is therefore able to support event-driven applications 135 of the type discussed with respect to Figure 3A and Figure 3B. Moreover, each domain 11 may be implemented through serverless capabilities of the cloud computing environment 10. For example, when the cloud computing environment 10 is an AWS environment, such serverless capabilities may include DynamoDB, Amazon S3, AWS Lambda, AWS Step Functions, and Amazon API gateway. Optionally, each domain 17 may be composed of one or more sub domains.

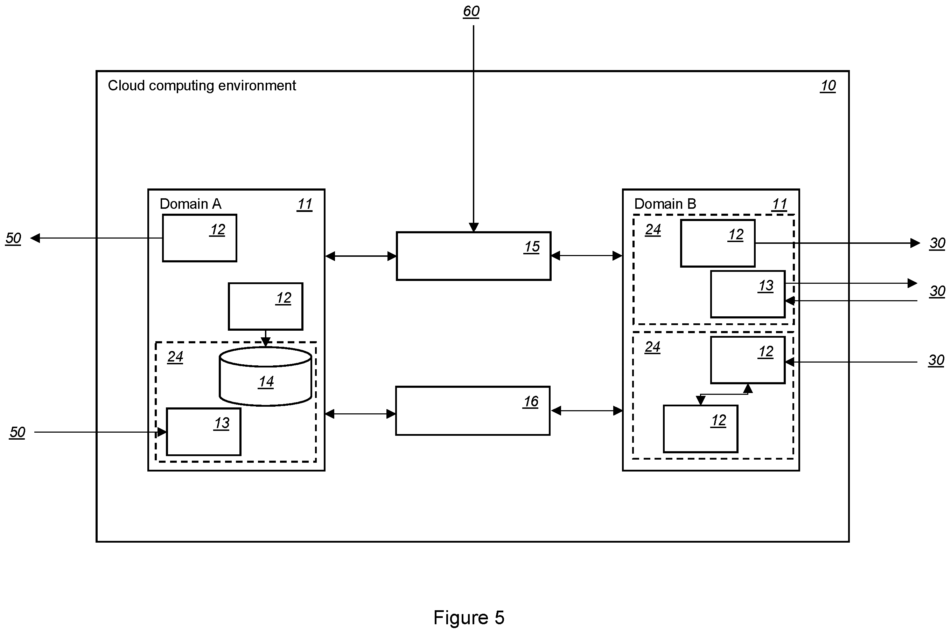

Referring briefly to Figure 5, each domain 11 contains one or more processing modules 12. The processing modules 12 are event-driven and can be used within one or more event-driven applications 135. Put another way, the processing modules 12 are agnostic to the event-driven applications 135, and therefore may be combined with other components to easily create a new event-driven application 135. This flexibility enables the cloud computing environment 10 to adapt to changing requirements and support a wide range of event-driven applications 135. When the cloud computing environment 10 is an AWS environment, each of the processing modules 12 may be hosted on AWS ECS (Container) running on EC2 or AWS Fargate.

In some examples, the domain 11 may include one or more data streams 13 that are configured to stream protected data. These data streams 13 may be event-driven (i.e. event streams), and they may have incoming and outgoing connections to various components within the cloud computing environment 10 and outside of the cloud computing environment 10. For instance, within the cloud computing environment 10, the data streams 13 may be used to communicate data to and/or from one or more processing modules 12, one or more domains 11, one or more processing engines 17, one or more databases 14, and the like. As another example, an event-driven data stream (i.e. an event stream) may be used to communicate data between a producer domain and a consumer domain. Outside of the cloud computing environment 10, the data streams 13 may be used to communicate with local server 20 and/or external provider systems 40. In an AWS environment, such data streams 13 may be provided by Amazon Kinesis, which is a particular type of scalable and durable real-time data streaming application, or another data streaming application.

Each domain 11 may also contain one or more domain databases 14. Domain databases 14 may be used for different reasons, such as to log event processing occurring within the domain 11. In some examples, a database 14 is configured to store protected data. The database 14 may be a NoSQL database, such as DynamoDB, which provides a flexible and scalable approach for storing and managing data. The use of a NoSQL database 14 ensures that the cloud computing environment 10 can efficiently handle large volumes of data and support a wide range of applications.

The one or more processing modules 12, data streams 13, and domain databases 14 work together to provide a scalable, secure, and efficient domain 11 for processing and managing protected data.

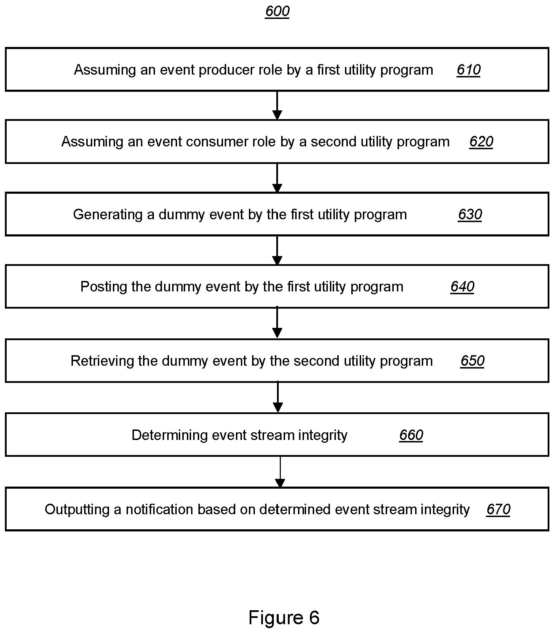

In some examples, the domain 11 may be sub-divided into one or more cloud-based accounts 24. Any one or more of the processing modules 12, data streams 13 and domain databases 14 may be associated with a particular cloud-based account 24. Alternatively, it may be that none of the processing modules 12, data streams 13 and domain databases 14 is associated with the particular cloud-based account 24. The domain 11 may comprise one or more processing modules 12, data streams 13, and/or domain databases 14 that are not associated with any cloud-based account 24. For example, as shown in Figure 6A, domain A 11 comprises a single cloud-based account 24 with which data stream 13 and domain database 14 are associated. Also as shown in Figure 5, domain B 11 comprises two cloud-based accounts 24. One of the processing modules 12 and the data stream 13 are associated with a first cloud-based account 24 of domain B 11, and the remaining two processing modules 12 are associated with a second cloud-based account 24 of domain B 11.

Referring back to Figure 4, processing engine 17 may contain a service integration layer 18. The service integration layer 18 is responsible for communications with local server 20. In particular, the service integration layer 18 uses APIs and/or event streaming patterns to enable standardisation and scaling for data between the processing engine 17 in the cloud computing environment 10 and the local server 20. Preferably, the service integration layer 18 includes an anti-corruption layer to facilitate integration between local server 20 (which does not support event-driven applications) to the cloud computing environment 10 (which does support event-driven applications) and vice versa.

In one particular consumer banking example, the cloud computing environment 10 is an AWS environment. In such an example, the cloud computing environment 10 includes at least two processing engines 17: processing engine A relating to financial product processing and processing engine B relating to application processing. Processing engine A 17 includes a plurality of domains 11, i.e. domains A, B, C, D... n. Such domains may include product management domains, primary domains, feature-driven domains and supplementary domains. Examples of primary domains include a payment processing domain, which manages real time account balances and supports user payment activity, and a transaction processing domain which relates to accounting and operational processing. Another example of a primary domain is an account operation domain, which controls how the execution of a process for an account is to be operated. Processing engine B includes one domain 11, i.e. domain Z. Such a domain may be an apply domain that is used so that a new or established user can apply to receive various resources (e.g. financial resources). The apply domain may also be used to on-board new users to the cloud computing environment 10.

Turning back to Figure 4, the cloud computing environment 10 also includes a data processing layer 19. The data processing layer 19 provides a common aggregation point for cloud computing environment 10 for providing data to various data platforms, for further analysis and/or manipulation.

Figure 5 shows an example integration pattern of cloud computing environment 10 for implementing the invention. The integration pattern is a prescribed set of rules for connecting and coordinating different software components to and within the cloud computing environment 10. Such integration patterns particularly assist with data exchange, communication, and interoperability of various applications, including event-driven applications 135 and batch-driven applications. Specifically, Figure 5 shows an integration pattern within cloud computing environment 10 and from user device 60.

Referring to Figure 5, two integration patterns are shown. In particular, the cloud computing environment 10 is shown to include a first integration pattern, an inter-domain API (Application Programming Interface) 15. The inter-domain API 15 is configured to connect user devices 60 with one or more domains 11. This inter-domain API 15 allows user devices 60 to access and interact with the cloud computing environment 10, enabling users to, for example, call an application service API exposed by a domain 11 and/or access and manage their protected data securely and efficiently. In particular, this connection allows the user devices 60 to access and interact with the various processing modules 12, data streams 13, and other components within the domains 11.

In some examples, the inter-domain API 15 may provide a secure and efficient communication channel between the user devices 60 and the cloud computing environment 10. This secure communication channel may be established using various security protocols, including HTTPS, and encryption techniques to ensure the confidentiality, integrity, and availability of the data being transmitted between the user devices 60 and the cloud computing environment 10. The inter-domain API 15 may also provide various functionalities and services to the user devices 60, such as authentication, authorisation, data retrieval, data manipulation, and other application-specific operations. By providing these functionalities and services, the inter-domain API 15 enables the user devices 60 to seamlessly interact with the cloud computing environment 10 and perform various tasks and operations within the hosted applications 135.

A second integration pattern, inter-domain message bridge 16, is also shown in Figure 5. The inter-domain message bridge 16 is positioned between two (or more) domains, and allows events in one domain to be pushed or pulled to another domain. This inter-domain message bridge 16 enables efficient communication and data transfer between domains, ensuring that data is processed and managed securely and efficiently within the cloud computing environment 10. This is particularly advantageous in a cloud computing environment 10 that comprises a plurality of domains 11 with different security boundaries and data processing requirements.

The inter-domain message bridge 16 is designed to support event-driven communication between domains 11, which is a key aspect of the asynchronous event-driven applications 135 hosted within the cloud computing environment 10. By enabling events in one domain 11 to be pushed or pulled (or "published") to another domain 11 as needed, the inter-domain message bridge 16 ensures that the processing modules 12 within the domains 11 can efficiently handle and process the protected data in an event-driven manner. The inter-domain message bridge 16 may be configured to support different event data formats, including NoSQL and JSON, to ensure compatibility with the various processing modules 12 and applications 135 within the cloud computing environment 10.

It should be appreciated that the architecture of cloud computing environment 10 of Figure 5 and the integration pattern of Figure 5 are merely exemplary. Other architectures and integration patterns may be used for implementing the invention.

### Event Stream Integrity Assessment

Figure 6 is a flow diagram of a computer-implemented method for assessing event stream integrity, according to an embodiment of the invention. The method may be performed in the cloud computing environment 10 as illustrated in Figs. 2, 3A, 4, and 5.

As explained above, an event refers to a discrete and significant occurrence or notification that triggers a specific action or process, and events can be used to signal that a particular condition or change has occurred and should be processed or responded to. In the present embodiment, events are transmissible from a producer domain to a consumer domain through an event stream, the producer domain and the consumer domain being respective specific versions of the domains 11 as illustrated in Figures 4 and 5. An event stream is a flow of events that can be captured in real-time, allowing for prompt processing and analysis. As mentioned above, an event stream is a type of data stream 13 (as shown in Figure 5) where the protected data is event-driven. The event stream may be hosted on one of the producer domain and the consumer domain. Furthermore, the event stream may be conveyed over a secure communication channel between the producer domain and the consumer domain in a cloud computing environment, such as cloud computing environment 10.

The method 600 begins with step 610 at which a first utility program assumes an event producer role to access temporary security credentials. The mechanism of role assumption allows one entity, which in this case is the first utility program, to temporarily adopt the permissions associated with a role, which in this case is an event producer. Typically, an event producer generates events and post them to the event stream. Accordingly, while the first utility program is assuming the event producer role, it can perform the same tasks as an event producer.

Then, at step 620, a second utility program assumes an event consumer role to access temporary consumer security credentials. Similarly, this means that the second utility program is able to temporarily adopt the permissions of an event consumer. Typically, an event consumer receives and processes events from the event stream. Accordingly, while the second utility program is assuming the event consumer role, it can perform functions such as event retrieval and process the retrieved event data (e.g. parsing, filtering, transforming, etc.).

The first utility program is executable by a first processor in the producer domain, such as a processing module 12 as illustrated in Figure 5. The second utility program is executable by a second processor in the consumer domain, such as a processing module 12 in a different domain as illustrated in Figure 5. Furthermore, the first utility program and the second utility program may be functionally identical prior to respectively assuming the event producer role and assuming the event consumer role. For example, when the present embodiment is implemented in an AWS environment, the first utility program and the second utility program may be identical AWS Lambda functions prior to role assumption. The AWS Lambda functions offer the flexibility to be deployed in various environments without the need for managing underlying server infrastructure, thereby simplifying the process of adding the event stream integrity assessment capability to the producer domain and the consumer domain. This means the AWS Lambda functions can be added to any domain and enable the domain, whether it be the producer domain or the consumer domain, to perform the event stream integrity assessment technique of the invention.

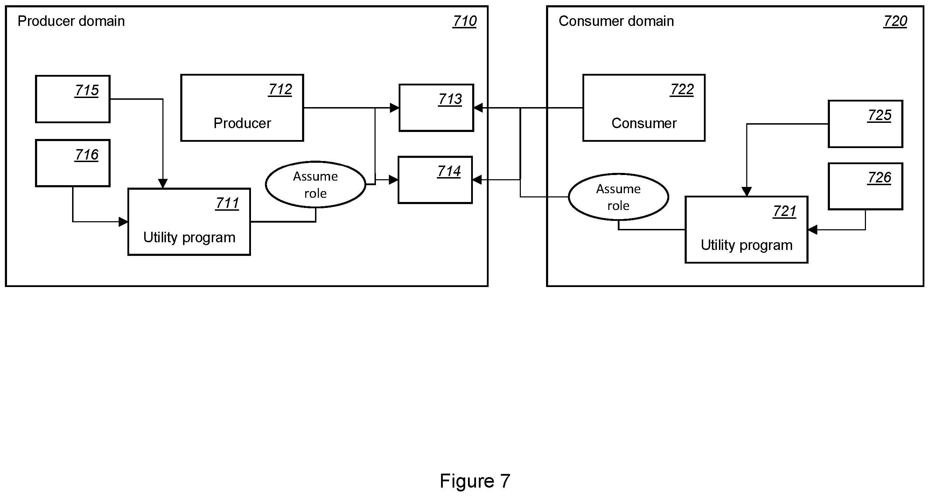

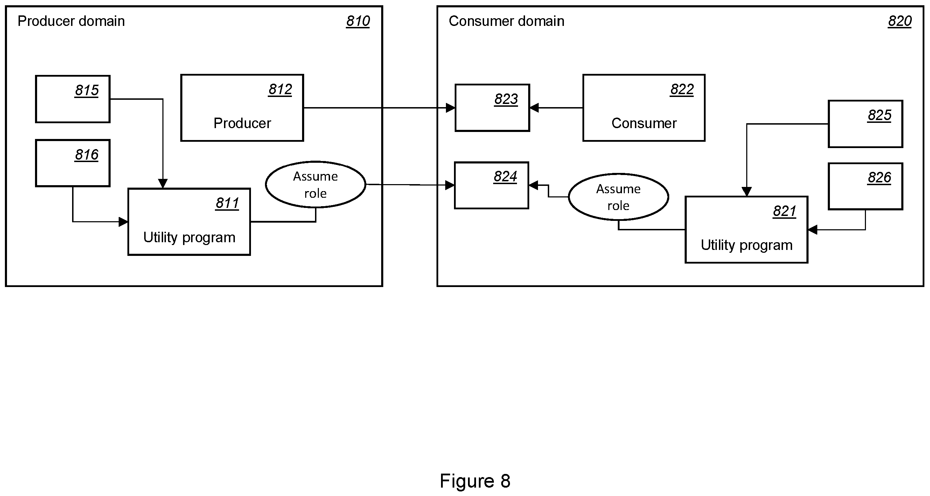

Respective configuration files can be supplied to the first and second utility programs to allow each utility program to assume an intended role. In the context of an AWS environment, an Identity and Access Management (IAM) role can be defined with a policy that grants the necessary permissions for the utility program. For example, a trust policy of an actual producer IAM role can be updated to include a producer utility IAM role as a trusted entity. Similarly, a trust policy of an actual consumer IAM role can be updated to include a consumer utility IAM role as a trusted entity. The IAM roles allow fine-grained permissions to be specified, and that access to the resources and actions are provided only to the trusted entities. By leveraging IAM roles, permissions can be tailored to specific tasks for services, which minimises the risk of unauthorised access. For example, the first utility program in the producer domain can be whitelisted for a limited duration (e.g. 5 minutes) during which it is granted the necessary permissions to generate and post events to the event stream. This minimises the risk of accidental or malicious actions and isolates the impact of potential security incidents. An Amazon Resource Name (ARN) of the respective IAM role can then be included in a configuration file that is to be supplied to the respective utility program. This will be explained in more detail with reference to Figures 7 and 8.

An example of a configuration file that can be supplied to the first utility program to enable it to assume an event producer role is provided in the following:

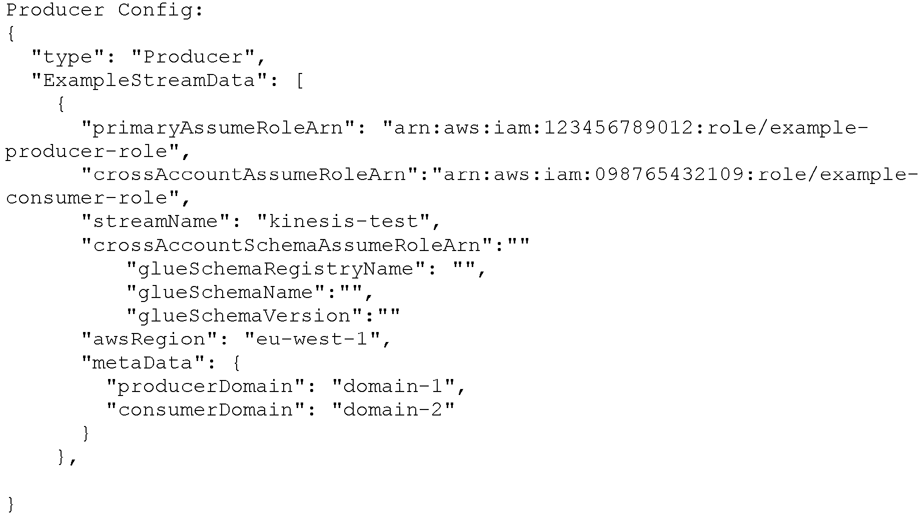

In this example, the configuration file includes a number of data elements corresponding to various data types, some of which are standard AWS terms and some of which are custom parameters.

In the configuration file, "Type" specifies an IAM role which is to be assumed by the utility program to which the configuration file is supplied, which in this case is a producer ("Producer"), and the name of the data generated and posted by the producer ("ExampleStreamData"). "primaryAssumeRoleArn" specifies the ARN of an IAM role that the utility program is to assume as the primary role, which in this case is the ARN of the producer ("arn:aws:iam:123456789012:role/example-producer-role"), "crossAccountAssumeRoleArn" specifies the ARN of an IAM role in another AWS account that should be assumed to gain temporary access to that account's resources, which in this case is the ARN of the consumer in the consumer domain ("arn:aws:iam:098765432109:role/example-consumer-role"). "streamName" specifies the event stream to which events (including dummy events) are posted and from which events (including dummy events) are retrieved, which in this case is the event stream named "kinesis-test". "crossAccountSchemaAssumeRoleArn" specifies the ARN of an IAM role in another account that is to be assumed by the utility program to access or manage a target live event schema. "glueSchemaRegistryName" specifies the name of the Glue Schema Registry where schemas are stored and manged. "glueSchemaName" specifies the name of the specific schema within the Glue Schema Registry which is to be used as the target live event schema. "glueSchemaVersion" specifies the version of the schema that should be used as the target live event schema. "awsRegion" specifies the geographic areas where the relevant actions (which, in the present case, the event stream integrity check) are performed. This is specified as "eu-west-1" which refers to a western European location. Under the section "metadata", the configuration file notes the names of the producer domain and the consumer domain (i.e. "domain-1" and "domain-2"), which may be names specific to the organisation that are only used internally.

An example of a configuration file that can be supplied to the second utility program to enable it to assume an event consumer role is provided in the following:

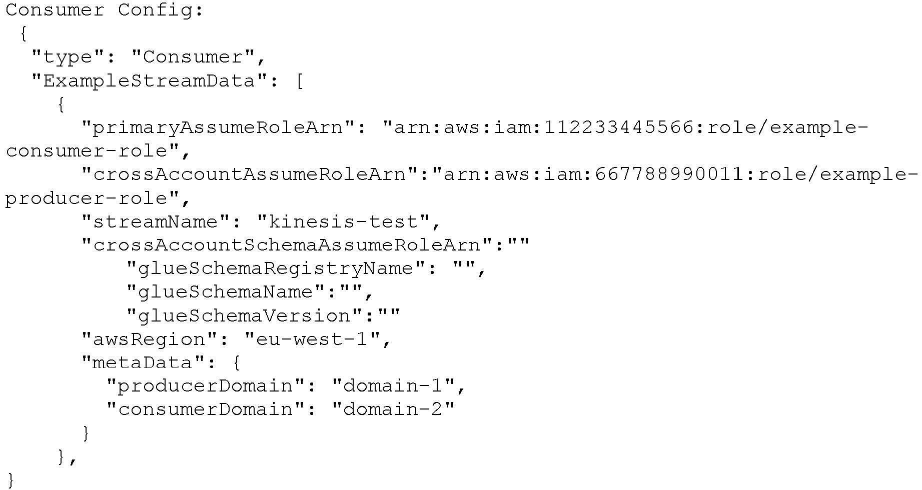

Similar to the configuration file example explained above, the current example includes a number of data elements corresponding to various data types, some of which are standard AWS terms and some of which are customer parameters. As mentioned above, the "Type" specifies an IAM role which is to be assumed by the utility program to which the configuration file is supplied, which in this case is a consumer ("Consumer"), and the name of the data received by the consumer ("ExampleStreamData"). In this case, the ARN of the IAM role that the utility program is to assume as the primary role is the ARN of the consumer ("primaryAssumeRoleArn": " arn:aws:iam:112233445566:role/example-consumer-role"). Also, the ARN of the IAM role in another AWS account that is to be assumed to gain temporary to that account's resources is the ARN of the producer ("crossAccountAssumeRoleArn": " arn:aws:iam:667788990011:role/example-producer-role"). As the rest of the data elements of the configuration file in this example ("streamName", "crossAccountSchemaAssumeRoleArn", etc.) correspond exactly to that of the example of the configuration file that is to be supplied to the first utility program, description of these data elements is omitted for the sake of brevity.

Returning to Figure 6, at step 630, the first utility program generates a dummy event. The dummy event comprises a dummy event payload. An example a dummy event payload of a dummy event is provided in the following:

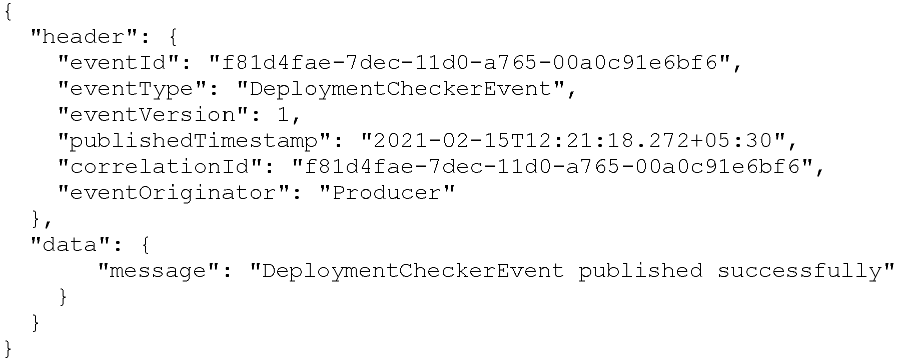

In this example, the dummy event payload includes a number of data elements corresponding to various data types, including a header field, an event identifier field ("eventld"), an event type field ("eventType"), an event version field ("eventVersion"), a publish time stamp field ("publishedTimestamp"), a correlation identifier field ("correlationld"), an event originator field ("eventOriginator"), a data field, and a message field.

Although not shown in the flow diagram of Figure 6, in some embodiments the method may further comprise receiving, at the first utility program, a target live event schema. In these embodiments, generating the dummy event at step 630 may be based on the received target live event schema. The target live event schema is a structured template that defines an expected format and content of a target live event, and this structured template can be used in the present embodiment for generating dummy events. The target live event schema can specify at least one of: a structure, a data type, and a constraint for a target live event. The schema can thus ensure consistent and accurate interpretation of event data across different components along a data processing workflow in the environment.

In some embodiments, prior to receiving the target live event schema, the method may comprise requesting, by the first utility program, the target live event schema from a schema registry. The schema registry according to some embodiments of the invention can serve as a repository where one or more schemas are stored, managed, and accessed. The schema registry may be hosted on a data integration service in the producer domain. For example, in embodiments that are implemented in an AWS environment, a data integration service such as AWS Glue can function as the schema registry in the producer domain by storing metadata about data structures.

Furthermore, although not illustrated in Figure 6, in embodiments where the first utility program receives a target live event schema, the method may further comprise validating, by the first utility program, the received target live event schema by comparing the dummy event payload against the target live event schema stored at the schema registry. This comparison checks whether the dummy event payload conform to the target live event schema. If the dummy event payload conforms to the target live event schema, the first utility program can determine that the received target live event schema is valid.

Although not illustrated in Figure 6, in some embodiments the method may further comprise requesting, by the second utility program from the schema registry, the target live event schema, and receiving, at the second utility program, the target live event schema. The target live event schema received at the second utility program enables validation of the dummy event payload (e.g. ensuring that the payload conforms to the schema). This can help reduce the risk of processing erroneous data.

Returning to Figure 6, at step 640, the first utility program which is assuming the event producer role posts the dummy event to the event stream. Then, at step 650, the second utility program which is assuming the event consumer role retrieves the dummy event from the event stream based on the dummy event payload. In some embodiments, the method may further comprise polling, by the second utility program, the event stream at regular intervals to check for new dummy events. In these embodiments, retrieving the dummy event at step 650 may be based on a result of the polling. In addition or as an alternative, in some embodiment the second utility program may receive dummy events pushed to it as they become available.

At step 660, the second utility program determines event stream integrity based on the dummy event payload. In some embodiments, the determination at step 660 may comprise performing analysis of the dummy event payload.

In more detail, determining event stream integrity by the second utility program at step 660 may comprise extracting one or more elements of the dummy event payload, and evaluating each of the one or more extracted elements against a respective predefined value. Using the dummy event payload example provided above, the second utility program may extract the value of the event type field, i.e. "DeploymentCheckerEvent", and evaluate this against an expected value for this field. In this case, it is expected that the dummy event payload of a dummy event would include, in the event type field, the value "DeploymentCheckerEvent". Hence, upon confirming the value of this field, the second utility program can confirm the integrity of the event stream. Other fields can be extracted and evaluated in a similar way, for example the second utility program may check whether the message field includes the value "DeploymentCheckerEvent published successfully".

In some embodiments, the result of the event stream integrity determination at step 660 may be a binary result indicating whether the event stream has maintained its integrity, e.g. positive/negative. In some embodiments, in addition to or instead of a binary result, the result of the event stream integrity determination at step 660 may be a validation failure. The validation failure may be due to schema mismatch, i.e. the dummy event payload does not conform to the target live event schema. As another example, the validation failure may be due to data corruption (e.g. where the data has been corrupted during transmission).

Although not illustrated in Figure 6, in some embodiments the method may further comprise storing by the second utility program, in a monitoring file, the determined event stream integrity. The stored data in the monitoring file may be integrated to a dashboard which display metrics associated with the first utility program, or the second utility program, or both, including the determined event stream integrity. The monitoring file may contain historical data of previously determined event stream integrity, for example the historical data within the last month, and in some cases additionally a cause of the validation failure if the result of the integrity determination is a validation failure. Storing this type of historical data in the context of the present invention provides a number of advantages. For example, the historical data of event stream integrity allows the lifecycle of data events to be traced, thus enabling an efficient way to detect and investigate data anomalies, as well as providing a way to validate whether changes to the event stream or other components of the data processing workflow have impacted the integrity of the event stream.

Returning to Figure 6, at step 670, the second utility program outputs a notification based on the event stream integrity determined at step 660.

As discussed above with reference to step 660, in some embodiments the result of the event stream integrity determination may be a validation failure. If the result of the event stream integrity determination is a validation failure, outputting a notification at step 670 may comprise outputting an alert indicating the validation failure. For example, this alert may be output via a cloud infrastructure monitoring service (e.g. AWS CloudWatch). The notification may comprise a failure indicator indicating a cause of the validation failure. For example, the failure indicator may indicate "schema mismatch", "data corruption", etc.

Although not illustrated in Figure 6, in some embodiments the method may further comprise applying, by a live consumer program (i.e. a consumer program deployed to receive real-world occurrences and interact with end-users), a filter for identifying one or more live events based on one or more live event payloads. In the context of the present invention, as opposed to a dummy event which is generated for the purpose of event stream integrity assessment and not intended to affect the data processing workflow, a live event is a real-world occurrence that triggers a response within the data processing workflow. For example, the live events may originate from actual user interactions in the system, and they may carry meaningful data to drive respective processes or workflows.

Each of the one or more live event payloads (which corresponds a respective live event) is different from the dummy event payload, such that filtering by the filter can be configured based on one or more attributes or values within the one or more live event payloads. In more detail, the applied filter may be configured to check conditions such as existence of a certain field or a certain value in the payload, and the live events whose live event payloads satisfy the filter criteria may be identified and retrieved by the live consumer program from the event stream.

In some embodiments, the method may further comprise retrieving, by the live consumer program, the one or more identified live events. In some scenarios, any event that is not identified as a live event may be deemed as a dummy event which is not to be retrieved from the event stream by the live consumer program. The dummy events which are not retrieved by the live consumer program may be ignored or processed differently. By performing this filtering process at the live consumer program to identify live events, the method enables event stream integrity to be assessed while minimising performance impact of the live consumer program as well as any downstream process(s) since dummy event(s) that are used for assessing event stream integrity would be essentially ignored by the live consumer program.

The live consumer program may be executable by a third processor in the consumer domain. In some embodiments, the live consumer program may assume the event consumer role prior to applying the filter so as to access the specific temporary consumer security credentials to perform the necessary actions.

It will be appreciated that the method 600 as described with reference to Figure 6 has been shown as individual steps carried out in a specific order. However, the skilled person will appreciate that these steps may be combined or carried out in a different order while achieving the desired result. Also, the skilled person will appreciate that the steps that are described as optional may be omitted whilst achieving the desired result.

Figure 7 illustrates components of a cloud computing environment for implementing some embodiments of the invention. As shown in Figure 7, there is provided a producer domain 710 and a consumer domain 720. The producer domain 710 encompasses the entities and services responsible for generating and posting events to an event stream. The consumer domain 720, on the other hand, encompasses the entities and services that retrieve or receive and process events from the event stream.

The producer domain 710 contains a first utility program 711, a live producer program 712, a streaming component 713, a data integration service 714, a first object storage component 715, and a first trigger component 716. The consumer domain 720 contains a second utility program 721, a live consumer program 722, a second object storage component 725, and a second trigger component 726.

On the producer domain side, the first utility program 711 is executable by a processor (not shown) in the producer domain 710, and it can assume an event producer role so as to access temporary producer security credentials. In more detail, the first trigger component 716 can trigger the first utility program 711 at a scheduled time and pass a resource path corresponding to a specific configuration file to the first utility program 711. In some embodiments, this scheduled time may be determined or selected based on one or more certain conditions, such as conditions related to data traffic, for example the scheduled time may be selected so that it is a time during which data traffic is typically minimal. The resource path specifies a location of the configuration file in the first object storage component 715 so that the first utility program 711 can retrieve the configuration file from the first object storage component 715 and load configuration settings from the configuration file so as to customise its behaviour at runtime. In this case, the configuration file includes configuration settings that enable the first utility program 711 to access temporary producer security credentials so as to assume an event producer role. Once the first utility program 711 assumes the event producer role, it can generate a dummy event and post the dummy event to the event stream, which in the present embodiment is represented by the streaming component 713 hosted in the producer domain 710. The dummy event comprises a dummy event payload.

In the context of an AWS environment, the first utility program 711 may be an AWS Lambda function, the streaming component 713 may be Amazon Kinesis, the data integration service 714 may be AWS Glue, the first object storage component 715 may be an Amazon S3 (Simple Storage Service), the resource path may be a S3 path, the first trigger component 716 maybe Amazon Eventbridge, and the configuration file may include the Amazon Resource Name (ARN) of the Identity and Access Management (IAM) role that the first utility program will read in order to assume the event producer role.

There is also provided a live producer program 712 which is executable by a processor (not shown) in the producer domain 710 and is configured to generate and send live events (as opposed to dummy events). Specifically, the live producer program 712 may collect data from various sources, process the data, and encapsulate the data into discrete events. Each live event has a live event payload, and it may be encapsulated with metadata, e.g. timestamps, to facilitate processing of the live event. Once the events are generated, the live producer program 712 may post these events to the event stream, which in this embodiment is represented by the streaming component 713. As live events and dummy events posted to the streaming component 713, they may be immediately available for real-time processing by the second utility program 721 and/or the live consumer program 722.

In some embodiments, the first utility program 711 can receive a target live event schema, and in these embodiments the first utility program 711 can generate the dummy event based on the received target live event schema. Prior to receiving the target live event schema, the first utility program 711 may request this target live event schema from a schema registry, which is hosted at the data integration service 714. Furthermore, the first utility program 711 can validate the received target live event schema by comparing the dummy event payload against the target live event schema stored at the schema registry.

On the consumer domain side, the second utility program 721 is executable by a processor (not shown) in the consumer domain 720, and it can assume an event consumer role so as to access temporary consumer security credentials. In more detail, the second trigger component 726 can trigger the second utility program 721 at a scheduled time and pass a resource path corresponding to a specific configuration file to the second utility program 721. The resource path specifies a location of the configuration file in the second object storage component 725 so that the second utility program 721 can retrieve the configuration file from the second object storage component 725 and load configuration settings from the configuration file so as to customise its behaviour at runtime. In this case, the configuration file includes configuration settings that enable the second utility program 721 to access temporary consumer security credentials so as to assume an event consumer role. Once the second utility program 721 assumes the event consumer role, the second utility program 721 can retrieve a dummy event from the event stream (as represented by the streaming component 713) based on the dummy event payload of the dummy event, determine event stream integrity based on the dummy event payload, and output a notification based on the determined event stream integrity. Furthermore, the second utility program 721 can store the determined event stream integrity in a monitoring file, and this stored data can be integrated to a dashboard which can display metrics associated with the utility programs 711, 721.

In the context of an AWS environment, the second utility program 712 may be an AWS Lambda function, the second object storage component 725 may be an Amazon S3 (Simple Storage Service), the resource path may be a S3 path, the second trigger component 726 maybe Amazon Eventbridge, and the configuration file may include the Amazon Resource Name (ARN) of the Identity and Access Management (IAM) role that the first utility program will read in order to assume the event producer role.

In some instances, the second utility program 721 can determine events stream integrity by performing analysis of the dummy event payload. For example, it can extract one or more elements of the dummy event payload and evaluate each of the one or more extracted elements against a respective predefined value.

Also, in some embodiments, the second utility program 721 can request the target live event schema, for example from the schema registry that is hosted at the data integration service 721 in the producer domain 710.

In some embodiments, if a result of the event stream integrity determination is a validation failure, the second utility program 721 may output an alert indicating the validation failure in event stream integrity determination as part of the notification. This alert can be output via a cloud infrastructure monitoring service, e.g. AWS CloudWatch, or via email messaging, etc. The notification may further comprise a failure indicator that indicates a cause of the validation failure.

There is also provided a live consumer program 722 which is executable by a processor (not shown) in the consumer domain 720 and is configured to retrieve and process events from the event stream, as represented by the streaming component 713. For example, the live consumer program 722 may subscribe to the event stream and monitor for new events as they are posted by the live producer program 712. Upon detecting new events, the live consumer program 722 can retrieve these events and perform various operations on the data contained in the events, such as data transformation, filtering, and aggregation.

In some embodiments, the live consumer program 722 can apply a filter for identifying one or more live events (e.g. those generated and posted by the live producer program 712) based on one or more live event payloads, since each live event payload is different from the dummy event payload. For example, the filter can be configured such that the live consumer program 722 checks for conditions such as existence of a certain field or value which is present in a live event payload but absent in the dummy event payload. Furthermore, the live consumer program 722 can retrieve the one or more identified live events.

Prior to applying the filter, the live consumer program 722 can assume the event consumer role in a similar manner as described above with reference to the second utility program 721 assuming the event consumer role.

Figure 8 illustrates components of a cloud computing environment for implementing some embodiments of the invention. As shown in Figure 8, there is provided a producer domain 810 and a consumer domain 820. Similar to the producer domain 710 and the consumer domain 720 as illustrated in Figure 7, the producer domain 810 encompasses the entities and services responsible for generating and posting events to an event stream, and the consumer domain encompasses the entities and services that retrieve or receive and process events from the event stream.

The producer domain 810 contains a first utility program 811, a live producer program 812, a first object storage component 815, and a first trigger component 916. The consumer domain 820 contains a second utility program 821, a live consumer program 822, a streaming component 823, a data integration service 824, a second object storage component 825, and a second trigger component 826.

Most of the components as illustrated in Figure 8 are the same or similar to those illustrated in Figure 7 and described above. Hence, for the sake of brevity, description of the functionalities of some of these components will be omitted. It is understood that the description above with reference to the first utility program 711, the live producer program 712, the streaming component 713, the data integration service 714, the first object storage component 715, the first trigger component 716, the second utility program 721, the live consumer program 722, the second object storage component 725, and the second trigger component 726 can be applied respectively to the first utility program 811, the live producer program 812, the streaming component 823, the data integration service 824, the first object storage component 815, the first trigger component 816, the second utility program 821, the live consumer program 822, the second object storage component 825, and the second trigger component 826.

The main difference between the arrangement of Figure 7 and that of Figure 8 is that in the arrangement of Figure 8 the streaming component 823 and the data integration service 824 are hosted in the consumer domain 820 rather than the producer domain 810. Hosting the streaming component 713 and the data integration service 714 in the producer domain 710, as illustrated in Figure 7, enables the application associated with or represented by the producer domain 710 to maintain control over the event stream as well as schema management. On the other hand, hosting the streaming component 823 and the data integration service 824 in the consumer domain 820, as illustrated in Figure 8, enables the application associated with or represented by the consumer domain 820 to maintain control over the event stream and schema management. Hence, at least in some embodiments, the decision of whether to host the streaming component and data integration service in the producer domain or the consumer domain may be influenced by which application has primary control over the lifecycle of the event stream. The arrangements illustrated in Figures 7 and 8 in which the streaming component and the data integration service can be hosted either in the producer domain or the consumer domain thus enable a variety of operational requirements associated with different use cases to be accommodated without compromising important considerations such as control and data governance.

It should be recognised that the various components and services described with reference to Figure 7 and Figure 8 are merely exemplary, and that other components and services may be used with the same functionality without departing from the scope of the invention.

### General

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A computer-implemented method for assessing event stream integrity, wherein events are transmissible from a producer domain to a consumer domain through an event stream, the method comprising:
   assuming by a first utility program, an event producer role to access temporary producer security credentials, wherein the first utility program is executable by a first processor in the producer domain;
   assuming, by a second utility program, an event consumer role to access temporary consumer security credentials, wherein the second utility program is executable by a second processor in the consumer domain;
   generating, by the first utility program, a dummy event, wherein the dummy event comprises a dummy event payload;
   posting, by the first utility program assuming the event producer role, the dummy event to the event stream;
   retrieving, by the second utility program assuming the event consumer role, the dummy event from the event stream based on the dummy event payload;
   determining, by the second utility program, event stream integrity based on the dummy event payload; and
   outputting, by the second utility program, a notification based on the determined event stream integrity.
2. The method of embodiment 1, wherein determining event stream integrity by the second utility program comprises performing analysis of the dummy event payload.
3. The method of embodiment 1 or embodiment 2, wherein determining event stream integrity by the second utility program comprises:
   extracting one or more elements of the dummy event payload; and
   evaluating each of the one or more extracted elements against a respective predefined value.
4. The method of any one of the preceding embodiments, further comprising receiving, at the first utility program, a target live event schema, wherein generating the dummy event is based on the target live event schema.
5. The method of embodiment 4, further comprising, prior to receiving the target live event schema, requesting, by the first utility program, the target live event schema from a schema registry.
6. The method of any one of embodiments 4 to 6, further comprising validating, by the first utility program, the received target live event schema by comparing the dummy event payload against the target live event schema stored at the schema registry.
7. The method of embodiment 5 of embodiment 6, wherein the schema registry is hosted on a data integration service in the producer domain.
8. The method of any one of embodiments 4 to 7, further comprising:
   requesting, by the second utility program from the schema registry, the target live event schema; and
   receiving, at the second utility program, the target live event schema.
9. The method of any one of the preceding embodiments, wherein the event stream is hosted on one of the producer domain and the consumer domain.
10. The method of any one of the preceding embodiments, wherein the first utility program and the second utility program are functionally identical prior to respectively assuming the event producer role and assuming the event consumer role.
11. The method of any one of the preceding embodiments, further comprising storing, in a monitoring file, the determined event stream integrity.
12. The method of any one of the preceding embodiments, wherein if a result of the event stream integrity determination is a validation failure, outputting the notification comprises outputting an alert indicating the validation failure in event stream integrity determination.
13. The method of embodiment 12, wherein the outputting the alert comprises outputting the alert via a cloud infrastructure monitoring service.
14. The method of embodiment 12 or embodiment 13, wherein the notification further comprises a failure indicator indicating a cause of the validation failure.
15. The method of any one of the preceding embodiments, further comprising:
   applying, by a live consumer program, a filter for identifying one or more live events based on one or more live event payloads, wherein the live consumer program is executable by a third processor in the consumer domain, and wherein each of the one or more live event payloads is different from the dummy event payload; and
   retrieving, by the live consumer program, the one or more identified live events.
16. The method of embodiment 15, further comprising, prior to applying the filter by the live consumer program, assuming, by the live consumer program, the event consumer role.
17. The method of any one of the preceding embodiments, wherein the event stream is conveyed over a secure communication channel between the producer domain and the consumer domain in a cloud computing environment.
18. A computing environment comprising:
   one or more computer systems communicatively coupled to each other; and
   at least one processing system configured to perform the steps of any preceding embodiment.
19. A computer-readable medium comprising instructions which, when processed by at least one processing system, cause the processing system to perform the steps of any one of embodiments 1 to 17.

## Claims

1. A computer-implemented method for assessing event stream integrity, wherein events are transmissible from a producer domain to a consumer domain through an event stream, the method comprising:
assuming, by a first utility program, an event producer role to access temporary producer security credentials, wherein the first utility program is executable by a first processor in the producer domain;
assuming, by a second utility program, an event consumer role to access temporary consumer security credentials, wherein the second utility program is executable by a second processor in the consumer domain;
generating, by the first utility program, a dummy event, wherein the dummy event comprises a dummy event payload;
posting, by the first utility program assuming the event producer role, the dummy event to the event stream;
retrieving, by the second utility program assuming the event consumer role, the dummy event from the event stream based on the dummy event payload;
determining, by the second utility program, event stream integrity based on the dummy event payload; and
outputting, by the second utility program, a notification based on the determined event stream integrity.

2. The method of claim 1, wherein determining event stream integrity by the second utility program comprises performing analysis of the dummy event payload.

3. The method of claim 1 or claim 2, wherein determining event stream integrity by the second utility program comprises:
extracting one or more elements of the dummy event payload; and
evaluating each of the one or more extracted elements against a respective predefined value.

4. The method of any one of the preceding claims, further comprising receiving, at the first utility program, a target live event schema, wherein generating the dummy event is based on the target live event schema.

5. The method of claim 4, further comprising, prior to receiving the target live event schema, requesting, by the first utility program, the target live event schema from a schema registry.

6. The method of any one of claims 4 to 6, further comprising validating, by the first utility program, the received target live event schema by comparing the dummy event payload against the target live event schema stored at the schema registry.

7. The method of any one of claims 4 to 6, further comprising:
requesting, by the second utility program from the schema registry, the target live event schema; and
receiving, at the second utility program, the target live event schema.

8. The method of any one of the preceding claims, wherein the first utility program and the second utility program are functionally identical prior to respectively assuming the event producer role and assuming the event consumer role.

9. The method of any one of the preceding claims, further comprising storing, in a monitoring file, the determined event stream integrity.

10. The method of any one of the preceding claims, wherein if a result of the event stream integrity determination is a validation failure, outputting the notification comprises outputting an alert indicating the validation failure in event stream integrity determination.

11. The method of claim 10, wherein the notification further comprises a failure indicator indicating a cause of the validation failure.

12. The method of any one of the preceding claims, further comprising:
applying, by a live consumer program, a filter for identifying one or more live events based on one or more live event payloads, wherein the live consumer program is executable by a third processor in the consumer domain, and wherein each of the one or more live event payloads is different from the dummy event payload; and
retrieving, by the live consumer program, the one or more identified live events.

13. A computing environment comprising:
one or more computer systems communicatively coupled to each other; and
at least one processing system configured to perform the steps of any preceding claim.

14. A computer-readable medium comprising instructions which, when processed by at least one processing system, cause the processing system to perform the steps of any one of claims 1 to 12.

## Amended claims

### Amended claims in accordance with Rule 137(2) EPC.

1. A computer-implemented method for assessing event stream integrity, wherein events are transmissible from a producer domain (710) to a consumer domain (720) through an event stream, the method comprising:
assuming, by a first utility program (711), an event producer role to access temporary producer security credentials, wherein the first utility program (711) is executable by a first processor in the producer domain (710);
assuming, by a second utility program (721), an event consumer role to access temporary consumer security credentials, wherein the second utility program (721) is executable by a second processor in the consumer domain (720);
generating, by the first utility program (711), a dummy event, wherein the dummy event comprises a dummy event payload;
posting, by the first utility program (711) assuming the event producer role, the dummy event to the event stream;
retrieving, by the second utility program (721) assuming the event consumer role, the dummy event from the event stream based on the dummy event payload;
determining, by the second utility program (721), event stream integrity based on the dummy event payload; and
outputting, by the second utility program (721), a notification based on the determined event stream integrity.

2. The method of claim 1, wherein determining event stream integrity by the second utility program (721) comprises performing analysis of the dummy event payload.

3. The method of claim 1 or claim 2, wherein determining event stream integrity by the second utility program (721) comprises:
extracting one or more elements of the dummy event payload; and
evaluating each of the one or more extracted elements against a respective predefined value.

4. The method of any one of the preceding claims, further comprising receiving, at the first utility program (711), a target live event schema, wherein generating the dummy event is based on the target live event schema.

5. The method of claim 4, further comprising, prior to receiving the target live event schema, requesting, by the first utility program (711), the target live event schema from a schema registry.

6. The method of claim 4 or claim 5, further comprising validating, by the first utility program (711), the received target live event schema by comparing the dummy event payload against the target live event schema stored at the schema registry.

7. The method of any one of claims 4 to 6, further comprising:
requesting, by the second utility program (721) from the schema registry, the target live event schema; and
receiving, at the second utility program (721), the target live event schema.

8. The method of any one of the preceding claims, wherein the first utility program (711) and the second utility program (721) are functionally identical prior to respectively assuming the event producer role and assuming the event consumer role.

9. The method of any one of the preceding claims, further comprising storing, in a monitoring file, the determined event stream integrity.

10. The method of any one of the preceding claims, wherein if a result of the event stream integrity determination is a validation failure, outputting the notification comprises outputting an alert indicating the validation failure in event stream integrity determination.

11. The method of claim 10, wherein the notification further comprises a failure indicator indicating a cause of the validation failure.

12. The method of any one of the preceding claims, further comprising:
applying, by a live consumer program (722), a filter for identifying one or more live events based on one or more live event payloads, wherein the live consumer program (722) is executable by a third processor in the consumer domain (720), and wherein each of the one or more live event payloads is different from the dummy event payload; and
retrieving, by the live consumer program (722), the one or more identified live events.

13. A computing environment (10) comprising:
one or more computer systems communicatively coupled to each other; and
at least one processing system configured to perform the steps of any preceding claim.

14. A computer-readable medium comprising instructions which, when processed by at least one processing system, cause the processing system to perform the steps of any one of claims 1 to 12.
